(19) **Europäisches Patentamt / European Patent Office / Office européen des brevets**

(11) **EP 4 578 286 A1**

(12) **EUROPEAN PATENT APPLICATION**

(43) Date of publication:
   **02.07.2025 Bulletin 2025/27**

(21) Application number: **23383392.0**

(22) Date of filing: **28.12.2023**

(51) International Patent Classification (IPC):
   **A01N 25/02** (2006.01)   **A01N 47/06** (2006.01)
   **C01B 15/026** (2006.01)   **C07C 407/00** (2006.01)
   **A01P 1/00** (2006.01)

(52) Cooperative Patent Classification (CPC):
   **A01N 47/06; A01N 25/02; C01B 15/026**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(71) Applicants:
   • **Universitat Jaume I**
     **12071 Castellón De La Plana (ES)**
   • **Estévez Company, Carlos**
     **12071 Castellón (ES)**

(72) Inventors:
   • **Estévez Company, Carlos**
     **12071 Castellón (ES)**
   • **García-Verdugo Cepeda, Eduardo**
     **Castellón (ES)**
   • **Luis Lafuente, Santiago Vicente**
     **Castellón (ES)**
   • **Maciá Delgado, María**
     **Castellón (ES)**
   • **Sans Sangorrín, Víctor**
     **Castellón (ES)**
   • **Sánchez Velandia, Julián Eduardo**
     **Castellón (CO)**

(74) Representative: **Pons**
   **Glorieta Rubén Darío 4**
   **28010 Madrid (ES)**

(54) **METHOD FOR THE PREPARATION OF WATER-FREE DISINFECTION AND STERILISATION AGENTS AND USE THEREOF**

(57)   The present invention relates to a method for the production of a water-free disinfection agent comprising hydrogen peroxide and a water-free sterilisation agent comprising a peroxycarbonic acid alkyl ester and hydrogen peroxide from non-toxic precursors. The present invention also relates to the formulation of said disinfection/sterilisation agents with liquid and gaseous carrier fluids and the use of said agents and formulations in cleaning, sanitation, disinfection and sterilisation processes.

**EP 4 578 286 A1**

**Description**

The present invention relates to water-free disinfection and sterilisation agents, a method for their production from non-toxic precursors, and use thereof.

Therefore, this invention can be framed within the field of disinfection and sterilisation products.

## BACKGROUND OF THE INVENTION

The increasing demand for safer disinfection and sterilisation agents reflects a growing awareness and concern for the safety aspects associated with traditional methods of infection control. Sterilisation is a critical process in various industries, including healthcare, pharmaceuticals, and food processing, to eliminate or inactivate microorganisms and ensure the safety of products and environments. Historically, chemicals such as ethylene oxide have been widely used for sterilisation due to their effectiveness. However, these agents may pose risks such as flammability, worker exposure, and toxicity.

In response to these concerns, there is a rising demand for sterilisation agents that provide comparable or increased efficacy while addressing these safety issues. The quest for safer sterilisation options is driven by the need to protect both human health and the environment. This demand is encouraging the development of innovative technologies and formulations that can deliver robust sterilisation performance without compromising on safety.

Alternative sterilisation methods, such as those utilizing environmentally friendly compounds or novel application techniques, are gaining attention. The goal is to meet the increasing demand for effective disinfection and sterilisation while minimizing risks and ensuring a safer working environment for personnel involved in the sterilisation processes. The pursuit of safer sterilisation agents aligns with broader trends in industry and healthcare toward sustainability, worker safety, and responsible use of chemicals.

Innovative methods of disinfection and sterilisation should be evaluated against the criteria of an ideal low-temperature (<60°C) disinfection and sterilisation agent.

### Low temperature sterilisation methods in healthcare and pharmaceutical industry:

Table 1: Desired attributes of an optimal sterilisation agent in the healthcare sector.

| Attribute | Comments |
|---|---|
| High effectiveness | The agent should be capable of inactivating viruses, bacteria, tuberculosis-causing agents, fungi, and spores |
| Swift action | It should be able to achieve sterilisation rapidly |
| Microbial resistance | Microbes should not develop resistance against the sterilisation agent |
| Excellent penetration | The ability to deeply infiltrate commonly used packaging materials for medical devices and reach the inner portions of device lumens |
| Compatibility with materials | It should cause minimal changes in the appearance or function of processed items and packaging materials, even after multiple cycles |
| Non-hazardous | It must not pose any health risks to operators or patients and should be environmentally safe |
| Resistance to organic materials | It should maintain its effectiveness even when exposed to reasonable amounts of organic matter |
| Flexibility | Suitable for use in both large-scale installations and smaller, point-of-use setups |
| Monitor-friendly | Easy and precise monitoring through physical, chemical, and biological process indicators |
| Economical | Reasonably priced for both installation and routine operations |

### State of the art liquid phase sterilisation:

An automated machine known as the SYSTEM 1E Liquid Chemical Sterilant Processing System, produced by STERIS Corporation, uses an aqueous solution of peracetic acid to sterilize medical, surgical, and dental instruments chemically (e.g., endoscopes, arthroscopes) has been widely used since 1988. The sterilant, 35% peracetic acid, is supplied in a single-dose container. The container is punctured at the time of use, immediately prior to closing the lid and initiating the cycle. The concentrated peracetic acid is diluted to 0.2% with filtered water (0.2 mm) at a temperature of approximately 50°C. The diluted peracetic acid is circulated within the chamber of the machine and pumped through the channels of lumened devices such as endoscopes for 12 minutes, decontaminating exterior surfaces, lumens, and accessories. The limitations of liquid sterilisation technologies, like those liquid chemical sterilants like hydrogen peroxide, glutaraldehyde, or other peracetic acid-based solutions, include: i) Material compatibility: certain materials may be sensitive to the chemical sterilants, potentially leading to damage or degradation over time; ii) Efficacy on complex Instruments: sterilants might not effectively penetrate all parts of complex instruments with intricate designs or lumens; iii) Residue and rinsing: chemical residues might remain on instruments after sterilisation, necessitating thorough rinsing, which adds time and complexity to the process. the solution containing peracetic acid is corrosive. For this reason, an anti-corrosive agent is used. This is an impurity that must be eliminated after the medical items are sterilised. This is usually done by rinsing with filtered water. However, concern has been raised that filtered water may be inadequate to maintain sterility; iv) Handling and safety: the use of chemical sterilants requires careful handling and adherence to safety protocols to prevent harm to staff due to their potentially hazardous nature. The 35% peracetic acid is hazardous according to OSHA Hazard Communication Standard (29 CFR 1910.1200). It is toxic if inhaled or swallowed. It is corrosive if in contact with skin or eyes. Both the liquid and vapours are flammable. If heated, it may decompose and originate a fire and v) Environmental concerns: disposal of used chemical sterilants needs to be managed carefully to avoid environmental impact.

State of the art gas phase sterilisation

Ethylene oxide (ETO) has been extensively employed as a low-temperature sterilising agent since the 1950s. It has been the prevailing method for sterilising medical devices and supplies that are sensitive to temperature and moisture in healthcare facilities. It exhibits bactericidal, sporicidal, and virucidal properties. ETO owes its ability to penetrate packaging elements and device lumens to its high gas phase diffusion coefficient. This makes it particularly suitable for treating thermally sensitive or delicate materials with intricate designs like narrow lumened devices, syringes, probes, catheters, and pacemakers. Another advantage of ETO is its chemical compatibility with a wide range of materials.

Despite its advantages, the use of ethylene oxide for sterilisation has been limited due to the associated risks stemming from its strong mutagenic and carcinogenic characteristics. In the pharmaceutical industry Good Manufacturing Practices (GMP) recommend that this method of sterilisation should only be employed when no other alternative is available. On the other hand, ETO is flammable and requires the equipment to be ATEX certified. Despite having ATEX certification, and rigorous safety measures being followed, incidents still occur. On a specific occasion, a fire outbreak occurred when ETO ignited within the supply circuit before reaching the injection lance. ETO itself and its sterilisation by-products must be removed from medical items. This requires extended aeration periods.

The problems with ETO have been an opportunity for new technologies that provide alternative sterilisation agents to ETO. In the 1990s, after the ozone hole crisis, plasma hydrogen peroxide technology appeared as an alternative to mixtures of ethylene oxide with chlorofluorocarbons (CFCs), which were shown to cause the destruction of stratospheric ozone.

The use of plasma to sterilize containers was suggested in U.S. Pat. No. 3,383,163 and U.S. Patent 4,756,882. Plasma is an ionized body of gas which may be generated by the application of power from different sources. The ionized gas will contact microorganisms on the surface of the items to be sterilized and effectively destroy the microorganisms. Plasma hydrogen peroxide technology has found application in the in-house hospital sterilisation segment for the reprocessing of medical devices in small volume sterilisation chambers. The limitations of plasma hydrogen peroxide to widely replace ethylene oxide are several. First, plasma hydrogen peroxide cannot be effectively used in larger chambers due to diffusion limitations which impair its ability to diffuse homogeneously through the entire volume. Similar to the peracetic acid case, the gas plasma precursor, 56% hydrogen peroxide (HP), is supplied in cartridges containing single-dose vials, which are punctured at the beginning of the sterilisation cycle. HP is classified as a dual-use substance. This means it can be used to make explosives for malicious purposes. In the context of widespread terror attacks using HP as precursor of explosives, European authorities implemented legislative measures in 2019 in order to restrict the sale of HP with concentrations of 12% or higher to the general public. On the other hand, HP is classified as a hazardous substance due to its potential to violently decompose and originate fires during storage and transportation. Risks posed by HP increase with the concentration of its commercial solutions.

Steris Europe Inc in US10293068B2 provides a system based on vaporized hydrogen peroxide. This technology can be used for the disinfection of clean rooms in pharmaceutical facilities, for example, in the production of vaccines. The room must be aerated after the treatment. However, the method requires a relative humidity of 30% in the entire volume of the room prior to the delivery of the vaporized hydrogen peroxide WO2008134290A1. This is time consuming and energy intensive.

Nitrogen oxides, particularly nitrogen oxide ($NO_2$), have been proposed as an alternative to ETO in US20110274583A1 and US20180021466A1.Here are some disadvantages and challenges associated with the use of nitrogen oxides as sterilants:

Toxicity: Nitrogen dioxide is a toxic gas that can pose health risks to humans. Prolonged exposure to elevated levels of nitrogen dioxide can irritate the respiratory system, cause lung damage, and contribute to respiratory problems. Due to its toxicity, strict safety measures must be in place when using nitrogen dioxide as a sterilant.

Corrosivity: Due to its corrosive nature, nitrogen dioxide is often considered a challenging substance in industrial and environmental contexts. Nitrogen dioxide corrosivity is enhanced in the presence of moisture. When nitrogen dioxide comes into contact with water vapor, it forms nitric acid ($HNO_3$), which is a strong acid capable of corroding metals. The primary reaction involved in the corrosion of metals by nitrogen dioxide leads to the formation of metal nitrates, which contribute to the corrosion process.

Residue Formation: Nitrogen dioxide sterilisation may leave residues on treated surfaces. Residual nitrogen dioxide or by-products could potentially affect the functionality or safety of medical devices or other sensitive equipment.

Environmental Impact: Nitrogen oxides contribute to air pollution and are classified as air pollutants of high concern by environmental authorities. The release of these gases into the atmosphere can contribute to the formation of smog and other pollutants. Environmental regulations may restrict or regulate the use of nitrogen oxides as sterilants in order to comply with very strict emission standards.

Material Compatibility: Some materials may not be compatible with nitrogen dioxide sterilisation due to its corrosive nature. This corrosive property limit its applicability to specific types of materials and devices.

Validation Challenges: Achieving proper validation for sterilisation processes involving nitrogen oxides can be challenging. Ensuring consistent and effective sterilization while considering the safety of both the product and personnel requires thorough testing and validation procedures.

Ozone has also found application as sterilisation agent due to its oxidizing properties. The TsO3 company obtained limited FDA clearance for the sterilisation of certain medical devices. WO2008046214A1 and WO2008052332A1 detail a sterilisation process that involves sequentially exposing an article under vacuum first to a gaseous conditioning agent, like hydrogen peroxide, and then to a sterilant, preferably ozone. The process is designed to enhance sterilisation efficiency and reduce the amount of sterilant required, as well as the cycle times.

The main advantage of ozone sterilisation is its ability to leave no residues. However, there are several drawbacks associated with the use of ozone for sterilisation:

Toxicity and Health Risks: Ozone is a respiratory irritant, and exposure to elevated levels can cause irritation to the eyes, nose, and throat. Prolonged exposure or exposure to high concentrations may lead to more severe respiratory issues. Ozone is considered a potential lung irritant and can exacerbate existing respiratory conditions.

Limited Material Compatibility: The high oxidation potential of ozone may lead to undesired chemical reactions with certain materials, potentially causing degradation or damage. Some materials may be more sensitive to ozone exposure, limiting its applicability to specific items or equipment.

Longer Sterilization Times: Ozone sterilisation cycles may take longer compared to other sterilisation methods, such as steam or ethylene oxide. This longer cycle time can impact the efficiency and throughput of sterilisation processes.

Ozone Decomposition: Ozone is inherently unstable and can decompose over time. The shelf life of ozone can be limited, and the concentration of ozone in a sterilisation system may decrease over time, affecting its effectiveness. Continuous monitoring and maintenance of ozone generators are necessary to ensure consistent sterilization performance.

Environmental Considerations: Concerns have risen due to its adverse environmental profile. The accumulation of ozone in urban areas during special meteorological episodes has led authorities to ban road traffic in a number of cities. Together with nitrogen oxide, ozone is a highly monitored and regulated gas pollutant. In fact, the problem with nitrogen oxide is that it generates ozone through a well-known photochemical mechanism when exposed to solar radiation in polluted areas. Therefore, ozone based sterilisation systems must be subject to strict emission control measures and should be based on sound safety engineering.

Equipment Costs: The equipment required for ozone sterilisation can be complex and costly to install and maintain. This includes ozone generators and monitoring systems. The initial investment and ongoing operational costs may be higher compared to other sterilisation methods.

Training and Expertise: Proper implementation of ozone sterilisation requires specialised knowledge and training. Personnel involved in the operation and maintenance of ozone sterilisation equipment need to be well-trained to ensure the safe and effective use of the technology. Carbon dioxide ($CO_2$) has been used in certain sterilisation applications, particularly in the form of supercritical or dense phase $CO_2$ (US7108832B2 and US8388944B2). The main advantages are the ability of carbon dioxide to leave no hard to remove residue and its lack of toxicity at low concentrations. However, it also has limitations that may make it less suitable for certain applications. Here are some of the drawbacks:.

Limited Microbial Efficacy: Carbon dioxide has limited microbial efficacy compared to other commonly used sterilization methods such as steam or ethylene oxide. Achieving high-level microbial inactivation rates may require longer exposure times or higher pressures, making the process less practical for certain applications.

Temperature Sensitivity: The sterilising effectiveness of carbon dioxide is highly dependent on pressure and temperature. Achieving the necessary conditions for effective sterilisation may require precise control and monitoring of these parameters. This temperature sensitivity can limit the types of materials that can be safely sterilised.

Material Compatibility: Supercritical carbon dioxide exhibits solvent-like characteristics and is not compatible with several materials, including polystyrene and polyethylene terephtalate.

Penetration Limitations: Carbon dioxide has limited penetration ability compared to other sterilants. This limitation can be a challenge in sterilising complex devices with intricate geometries or densely packed materials, where ensuring that the sterilant reaches all surfaces is crucial.

Equipment Complexity and Cost: The equipment required for carbon dioxide sterilisation, especially in its supercritical form, can be complex and costly. Specialized chambers and systems are needed to maintain the required pressure and temperature conditions. The initial investment and ongoing maintenance costs may be higher compared to some other sterilisation methods.

Environmental Impact: While carbon dioxide is generally considered environmentally friendly and nontoxic, the use of high-pressure equipment and the energy requirements for maintaining supercritical conditions may contribute to the environmental footprint of the process.

Residuals and Degradation: Some polymers may swell, degrade, or undergo changes in mechanical properties when exposed to supercritical carbon dioxide. Polymers such as polyethylene and polypropylene are generally considered more resistant, while some elastomers and thermoplastic polymers may be sensitive. Some polymers may swell, which can impact dimensional stability. This swelling behaviour is important to consider, especially when dealing with precision components or products with tight tolerances. Residuals from the process may also be a consideration. Materials used in the construction of medical devices and other items contain additives, processing aids, or surface treatments. Supercritical carbon dioxide may interact with and potentially extract these substances during the sterilisation process, leading to the presence of residuals. Understanding the composition of materials is crucial for assessing potential residuals and thorough validation is necessary to ensure that the sterilisation process leaves no harmful residues on the sterilised items.

**Low temperature sterilisation methods in the food and beverage industry**

Table 2 Desired attributes of sterilisation agents in the food and beverage sector.

| Attribute | Comments |
|---|---|
| Rapid microbicidal activity | The agent should be capable of inactivating viruses, bacteria, fungi, and spores |
| Ease of application | Automated delivery of the disinfectant should be possible. Suitable for use in both large-scale installations and smaller, point-of-use setups |
| Compatibility with machinery | It must not damage parts of the equipment |
| Compatibility with packaging material | It should cause minimal changes in the appearance or function of processed items and packaging materials, even after multiple cycles |
| Ease of removal and minimum residues | The disinfectant must contain volatile components and difficult to remove disinfection by-products must be avoided |
| No threat to consumer health | It must not pose any health risks to consumers due to the presence of residual quantities in food or beverages |
| No health hazard to personnel around and environmentally benign | It must not pose any health or safety risks to operators and it must be environmentally safe |
| Non corrosive to surfaces treated | It must not corrode metal parts of equipment |
| Economical and easy to handle | Reasonably priced for both installation and routine operations |

Disinfectants play a crucial role in this sector by mitigating the risk of pathogenic microorganisms, thereby extending the shelf life of processed foods. The increasing food and beverage market demand for disinfectants is primarily caused by the rising need for processed foods. A noteworthy trend is the increasing preference for safer alternatives, replacing potentially harmful chemical disinfectants.

Packaging is becoming an essential part of the food production process, enhancing food suitability and safeguarding it against microbial, biological, and chemical alterations, thus extending the shelf life of packaged goods. To achieve an extended shelf life for food products, it is crucial to sterilize both the packaging materials and all surfaces that come into contact with the food, especially in the aseptic packaging of food items. This sterilisation process can be carried out through various methods, including heat, hydrogen peroxide, irradiation, infrared light, and combinations thereof.

Thermal methods of sterilisation like the use of dry heat, saturated steam and superheated steam are effective. However, the high temperatures damage many packaging materials, so they have limited application.

Chemical methods of sterilisation have emerged as alternatives to thermal methods. Liquid hydrogen peroxide aqueous solutions are equally effective methods and are the preferred method of sterilisation in aseptic packaging. However, they still require hot air at 80°C to achieve effective sterilisation. Another disadvantage is that the precursor solution of hydrogen peroxide is concentrated and classified as dual-use substance.

Combinations of liquid peracetic acid and hydrogen peroxide display the same advantages as hydrogen peroxide but its efficacy is higher even at lower temperature (20°C). Peracetic acid is capable of inactivating resistant spores and unlike hydrogen peroxide, it is stable against catalases. The main disadvantage of peracetic acid liquid solutions is that it can generate a vapour that contains acetic acid, which is irritating and can produce off-flavors (vinegar odor). This is why peracetic acid is not widely used in aseptic packaging sterilisation.

Irradiation methods like UV light and gamma rays are alsoeffective in the sterilisation of packaging. These methods leave no residue and can be operated at low temperature. However, the main disadvantage for food packaging sterilisation is that radiations are harmful to workers.

There are methods of making peroxycarbonic acid alkyl ester using hydrogen peroxide and different compounds as acid precursors, such as lactide and glycolide (US2021238135A1) or the corresponding polycarboxylic acid esters (WO9828267A1, WO9534537A1).

Regarding the synthesis of hydrogen peroxide, it can be obtained using anthraquinones as mediators in the presence of hydrogen, oxygen and a palladium catalyst (Jose M. Campos-Martin, et al. Angew. Chem. Int. Ed. 2006, 45, 6962-6984).

On the other hand, different methods have been reported to manufacture peroxyacetic acid (PAA) solutions *in situ* and at the point of use. For example, PAA can be generated by dissolving an activator (tetra-acetyl ethylenediamine) and a salt (sodium perborate or sodium percarbonate) in water, or *in situ* adding sodium hydroxide to a mixture of triacetin and hydrogen peroxide (US8546449). Different flow systems have also been reported for the generation of peroxides or peroxyacetic acid (WO2019191387A1, WO2008047263A2, WO0110215A1). However, these systems have technical, environmental and economic problems, such as expensive materials, the use of toxic and hazardous reagents, short life of the catalysts, and low concentration of PAA yield, among other drawbacks, which limit the use of these systems.

In view of the foregoing, the present invention proposes new disinfection and sterilisation agent compositions that overcome the limitations present in the disinfectants and sterililants known in the state of the art. The invention also discloses a method and system to obtain said agents on demand and *in situ* from simple, commercially available, cheap and non-toxic chemical precursors.

## DESCRIPTION OF THE INVENTION

The present invention relates to a method for the production and use of both a water-free disinfection agent comprising hydrogen peroxide and a water-free sterilisation agent comprising a peroxycarbonic acid alkyl ester and hydrogen peroxide. The disinfection/sterilisation agents are made from non-toxic organic precursors. The invention relates to the use of the water-free disinfection and sterilisation agents and compositions described below. The disinfection and sterilisation agents and their corresponding fluid solutions can be used in cleaning, sanitation, disinfection and sterilisation processes like the disinfection of rooms in pharmaceutical and healthcare facilities, public water facilities like pools, industrial water disinfection such as refrigeration circuits, the disinfection of foods like fruits and vegetables, food packaging materials, food surfaces, the disinfection of animals and animal farm equipment and facilities, the sterilisation of surfaces in pharmaceutical and healthcare facilities, medical devices, surgical instruments, the cleaning and sterilisation of reprocessed medical items and devices, and the sterilisation of food packaging materials. Based on the specific application and its related limitations, the use requirements of disinfection or sterilisation agents vary. Different formulations are presented in this invention to maximize effectiveness, ensure safety, and enhance the user experience. This tailored approach is essential for achieving optimal results in various contexts, whether in healthcare settings, laboratory environments, or industrial processes. Each application demands a unique solution that balances the agent's properties with the requirements of the task at hand.

A **first aspect** of the invention relates to a method for producing a water-free disinfection agent and a water-free sterilisation agent. This method completely avoids the use of water at any stage, ensuring that the resulting disinfection or sterilisation agent is entirely devoid of water or contains only negligible traces. Additionally, there is no water treatment or dilution involved in this procedure.

Securing a water-free active solution can be beneficial in specific applications where the presence of water is undesirable. Some clear advantages include:

1) Increased stability: the water-free active solution may exhibit increased stability compared to aqueous solutions. Water can contribute to the decomposition of active disinfection/sterilisation components such as hydrogen peroxide and organic peroxides over time and removing water may extend the shelf life of the active solution.

2) Reduced corrosivity: water-free hydrogen peroxide solution can be less corrosive in certain applications. Water can contribute to corrosion in metal systems, and eliminating water from hydrogen peroxide solutions can reduce corrosive effects.

3) Improved storage conditions: water-free active solutions can allow for storage under conditions that prevent water-related issues, such as freezing or crystallization. This could be particularly relevant in certain transportation and storage scenarios.

4) Enhanced reactivity: in some chemical reactions, the absence of water might be advantageous for controlling reaction kinetics or enhancing selectivity. The water-free conditions can be critical for certain catalytic processes.

5) Enhanced solubility with other organic solvents: the solubility of hydrogen peroxide ($H_2O_2$) in organic solvents can be influenced by the presence of water in its solutions. When water is present, the hydrogen peroxide solution may separate into distinct phases or layers due to the immiscibility of water with most organic solvents. This can pose a challenge in attaining a homogeneous mixture of hydrogen peroxide and organic solvents.

6) Synergistic effects: in some cases, combining hydrogen peroxide in the water-free active solution with certain organic solvents can have synergistic effects, enhancing the overall antimicrobial activity. Organic solvents can enhance the solubility of hydrogen peroxide, potentially improving its penetration into microbial cells. This increased penetration can enhance the antimicrobial efficacy of hydrogen peroxide.

7) Enhanced solubility and vaporization in a gas phase: The absence of water and the presence of an organic medium enhance the solubility of $H_2O_2$ and/or organic peroxides in gases like air or carbon dioxide ($CO_2$), facilitating a more effective and efficient process of solubilisation and evaporation of the water-free active solution. Besides, in environments with high pressure, such as those at atmospheric levels, the presence of excess water can lead to condensation issues. This requires an additional process step to lower the relative humidity within the sterilisation room or chamber to a suitable level before the introduction of the vaporized hydrogen peroxide aqueous solution.

The method for the preparation of a water-free active solution intended for use as disinfection and/or sterilisation agent comprises the following stages:

a) A liquid mixture of a primary or secondary alcohol and a dialkyl carbonate is contacted with oxygen ($O_2$ and/or air) in the presence of a photocatalyst and UV light to obtain hydrogen peroxide ($H_2O_2$) by reaction of oxygen with the alcohol present in the mixture through a photocatalytic reaction.
This stage a) allows to obtain a water-free disinfection agent, which preferably comprises: a primary or secondary alcohol (that has remained unreacted, as the reaction is not complete), a dialkyl carbonate (present in the original mixture), hydrogen peroxide and aldehyde or ketone (both obtained in the photocatalytic reaction between the primary or secondary alcohol and the oxygen).

b) The solution obtained in stage a) is placed in contact with a catalyst of the perhydrolysis reaction of the dialkyl carbonate, same being either non-enzymatic or enzymatic, at a temperature between 25°C and 80°C, to form a peroxycarbonic acid alkyl ester by reaction of the hydrogen peroxide formed in the previous stage a) and the dialkyl carbonate in the original mixture.

This stage b) enables the production of a water-free sterilisation agent, which preferably comprises:

- a primary or secondary alcohol (that has remained unreacted in step a)
- a dialkyl carbonate (that has remained unreacted, as the reaction in b) is not complete),
- hydrogen peroxide (that has remained unreacted, as the reaction in b) is not complete),
- an aldehyde or ketone (that was obtained in the reaction in step a),
- a peroxycarbonic acid alkyl ester (that is the reaction product between the dialkyl carbonate and hydrogen peroxide in step b), and
- an alcohol (that also results from the reaction product between the dialkyl carbonate and hydrogen peroxide in step b).

As indicated, no water is used at any stage, so that the disinfection agent or a sterilisation agent obtained does not contain water or only at traces level. Then, no treatment with water or dilution with water is carried out in this method.

In a preferred embodiment, the oxygen used in step a) can be pure $O_2$ or can come from air. More preferably, air at atmospheric pressure (1 atm) is used.

In a preferred embodiment, steps a) and b) are carried out simultaneously in a two step, one-pot process in the same reactor containing the photocatalyst and the catalyst of the perhydrolysis reaction, at a temperature between 25°C and 80°C, in the presence of oxygen and UV light. The liquid mixture of primary or secondary alcohol and a dialkyl carbonate is placed in contact with the two catalysts.

In a preferred embodiment, the starting mixture in stage a) comprises between 20-80% w/w of alcohol and the rest (up to 100%w/w) of dialkyl carbonate. More preferably, between 30-50% w/w of the alcohol.

In a preferred embodiment, the primary or secondary alcohol has a standard oxidation potential in acetonitrile (vs. reference Ferrocene 0/1+ electrode) of less than 0.15 V. The standard oxidation potential is calculated as described by Speelman et al., Energy Environ. Sci., 2022, 15, 4015-4024 and references therein. Briefly, the equilibrium potential for the oxidation of alcohols into aldehydes or ketones is calculated according to the expression

$$E^0_{R_2CO-R_2CHOH\ (org)} = E^0_{H^+-H_2\ (org)} + \frac{\Delta G^0_{+H_2(g)} + \Delta\Delta G^0_{solv}}{-2F}$$

where the first term in the right hand side of the equation is the equilibrium potential for the hydrogen evolution reaction in organic solvents, measured by the ferrocenium/ferrocene ($Fc^{+/0}$) couple. The first term in the numerator is the gas phase standard free energy of hydrogenation of the ketone or aldehyde to obtain the alcohol. The second term in the numerator is the difference between the standard free energies of solvation of the alcohol and the ketone or aldehyde, and F is the Faraday constant.

In a preferred embodiment, the dialkyl carbonate has a saturation vapour pressure of not less than 0.015 bar at 303.15 K and not less than 0.05 bar at 323.15 K determined using the static method, in which a small quantity of the organic liquid is placed in a container (Knudsen cell) with a small pinhole or orifice. The cell is maintained at a constant temperature in a vacuum chamber. As the organic liquid evaporates through the pinhole, the vapor molecules escape into the vacuum. By measuring the rate of effusion and knowing the temperature, the vapor pressure is determined using the Knudsen equation.

In a preferred embodiment, the primary or secondary alcohol has the following formula: $R_1$-CH(OH)-$R_2$, where $R_1$ is H or a C1-C10 alkyl group, preferably, C1-C4 alkyl and $R_2$ is a C1-C4 alkyl.

In a preferred embodiment, the primary or secondary alcohol is selected from the list comprising: isopropanol, ethanol, methanol and butanol. More preferably, the alcohol is isopropanol or ethanol.

The term "dialkyl carbonate" includes carbonates bound to two alkyl groups (alkyl-O-(C=O)-O-alkyl) and cyclic carbonates in which an alkylene group is attached to the -O-(C=O)-O- group, forming a cycle. The alkyl group is preferably a C1-C10 alkyl group, more preferably, C1-C4 alkyl. The alkyl group can be optionally substituted by one or several -OH groups. The alkylene group is preferably a C1-C5 alkylene group, more preferably, C2-C3 alkylene group. The alkylene group can be optionally substituted by one or several -OH groups

In a preferred embodiment, the dialkyl carbonate is selected from the list comprising: dimethyl carbonate, diethyl carbonate, propylene carbonate, ethylene carbonate, and glycerol carbonate.

The use of dialkyl carbonates as peroxycarbonic acid alkyl ester precursors is advantageous, as they are excellent solvents for a wide variety of organic and inorganic materials and, as such, are used in a variety of applications and compositions, including, but not limited to, cleaners, degreasers, dyes, fibres, plastics, batteries, as a gelling agent for clays, and as a curing agent/accelerator for foundry sand resins. They are economical, non-toxic, safe, non-corrosive and non-irritating, therefore suitable for use in applications involving human contact.

The dialkyl carbonate and alcohol precursors do not pose acute toxicity risks, as their lethal doses (50% mortality) exceed 4000 mg/kg. They are not identified as endocrine disruptors and are not categorized as carcinogenic or mutagenic substances. Furthermore, dialkyl carbonate and alcohol do not exhibit toxicity in terms of reproductive effects.

In stage a) of the method, hydrogen peroxide ($H_2O_2$) and an aldehyde or ketone are generated by a photocatalytic process of hydrogen transfer from an H donor (alcohol) to dissolved $O_2$ through the help of an excited photocatalyst. This reaction is preferably carried out in a photocatalytic reactor. The photocatalyst can be immobilised in an insoluble support or can be dissolved in the starting alcohol/dialkyl carbonate mixture.

In a preferred embodiment, the photocatalyst used in stage a) is selected from the list comprising: anthraquinone, 2-bromomethylanthraquinone, 1,8-dihydroxyanthraquinone, anthraquinone-2-carboxylic acid, anthraquinone 2-sulphonate sodium, 2-tert-butylanthraquinone, 2-methylanthraquinone, 2-ethylanthraquinone or heterogenous version of thereof.

Preferably, the photocatalyst is used in a concentration between 5 and 10 mM.

In a preferred embodiment, the photocatalyst is immobilised in a polymeric resin, which may or may not contain ionic liquids. Preferably, the molar ratio photocatalyst to the primary or secondary alcohol of the initial liquid mixture is between 0.01 % mol/mol and 10% mol/mol. Preferably, the polymeric resin is a chloride functionalised divinylbenzene crosslinked polystyrene resin. More preferably, the polymeric resin is Merrifield resin (2% divinylbenzene crosslinked polystyrene and chloride functionalised).

An "ionic liquid" is understood to be a chemical entity made up of ions, that is, salts that have a melting temperature below the boiling point of water (100 °C at sea level) and that are thermally and chemically stable. These liquid units can be immobilised on resin by chemical adsorption or by covalent bonding.

As for the light administered for the production of said photochemical reaction, it is in the UV range as indicated above, more preferably, the light administered is of a wavelength between 300 nm and 500 nm. The wavelength is preferably between 370 and 450 nm, more preferably, between 420 and 450 nm. An LED lamp or any UV light lamp can be used for this.

Preferably, the reaction of stage a) is carried out at room temperature (approx. 18-25°C) and/or for a period between 10 minutes and 3 hours, more preferably, between 30 minutes and 1 hour.

In a preferred embodiment, the molar ratio oxygen/ primary or secondary alcohol in the reacting mixture is maintained below 1.

In the second stage b) of the method, the reaction of the hydrogen peroxide generated in stage a) with the dialkyl carbonate takes place to give the corresponding peroxycarbonic acid alkyl ester. This reaction takes place in the presence of either a non-enzymatic or enzymatic catalyst. In the case of a non-enzymatic catalyst, this may be a catalyst containing Lewis acid groups. Preferably, a heterogeneous catalyst containing acid groups (e.g., strongly acidic cation exchange resins of the acrylate type or sulphonated polystyrene such as amberlite, nafion, or MOFs, i.e., metal organic frameworks). In the enzymatic case, it can be a lipase enzyme, such as *Fusarium solani pisi* lipase, *Candida antarctica* lipase, *Geobacillus thermoleovorans* IHI-91 lipase, *Kurtzmanomyces spec.* lipase. Preferably, CALB lipase (*Candida antarctica* lipase B), more preferably, CALB lipase immobilised on a polymer support.

In a preferred embodiment, stage b) is carried out in a fixed bed reactor.

In a preferred embodiment, the amount of the catalyst, preferably an enzyme, and ever more preferably CALB, is between 0.1 and 0.6 g/mL of the reactant mixture.

In a preferred embodiment, the reaction of stage b) is carried out at a temperature between 35 and 45°C, more preferably at 40°C.

In a preferred embodiment, the reaction of stage b) is carried out for a time of between 20 and 30 minutes.

In a preferred embodiment, the method is carried out continuously and/or at the point of use of the solution. By continuously supplying a flow of reagents, it is possible to carry out the method continuously without the need to carry out any separation and/or purification stage.

The *in-situ* generation of the active compounds, peroxycarbonic acid alkyl ester and hydrogen peroxide, avoids their isolation nor their storage and transport at high concentrations with the additional risks that this entails in terms of the possibility of self accelerated violent decompositions leading to catastrophic results. In addition, the invention avoids long-term storage of the sterilisation agent, which would also require the addition of various stabilising agents with consequent increased costs.

The method of the present invention can be carried out in a system configured to be able to carry out the method continuously. The system can comprise:

- a photocatalytic reactor, configured to carry out the reaction of stage a), which is equipped with a UV light source, an $O_2$ or air inlet and an optional outlet provided with a valve to open or close said outlet, wherein said outlet is configured to extract the solution obtained in the reaction of stage a)

- a liquid pump configured to introduce the alcohol/dialkyl carbonate starting mixture, contained in a vessel, into the photocatalytic reactor,

- a reactor (second reactor) connected in series with the photocatalytic reactor configured to receive the solution obtained in stage a) and carry out the reaction in stage b).

The system can comprise flow sensors, located at the inlet and outlet of each reactor, to control the supply of reagents to the system. Furthermore, it may comprise a light sensor connected to the UV light source in order to control the light applied to the photocatalytic reactor.

With this system setup, the reactors are linked, and the pumps and regulators, which can operate automatically and be programmed, control the continuous flow of reagents. This configuration enables the production of the disinfection agent from the photocatalytic reactor's outlet and the sterilisation agent from the biocatalytic second reactor's outlet as needed, on-site, without necessitating additional separation or purification stages.

A **second aspect** of the invention relates to a water-free disinfection agent, obtainable in stage a), that comprises a primary or secondary alcohol, a dialkyl carbonate, hydrogen peroxide, and an aldehyde or ketone.

The primary or secondary alcohol and the dialkyl carbonate are as defined in the first aspect of the present invention and the aldehyde or ketone is the oxidation product of said primary or secondary alcohol.

In a preferred embodiment, the water-free disinfection agent comprises between 20% w/w and 60% w/w of a primary or secondary alcohol, between 40% w/w and 80% w/w of a dialkyl carbonate, between 0.1% w/w and 10% w/w of hydrogen peroxide, and between 0.2% w/w and 20% w/w of aldehyde or ketone. More preferably, the water-free disinfection agent comprises between 25% w/w to 50% w/w of a primary or secondary alcohol, between 50% w/w and 70% w/w of a dialkyl carbonate, between 0.5% w/w and 5% w/w of hydrogen peroxide, and between 0.5% w/w and 10% w/w of aldehyde or ketone (w/w refers to "by weight").

A **third aspect** of the invention relates to a water-free sterilisation agent, obtainable in stage b), that comprises a primary or secondary alcohol, a dialkyl carbonate, hydrogen peroxide, a peroxycarbonic acid alkyl ester, an aldehyde or ketone, and an alcohol derived from the reaction between the dialkyl carbonate and the hydrogen peroxide.

The primary or secondary alcohol and the dialkyl carbonate are as defined in the first aspect of the present invention.

In a preferred embodiment, the water-free sterilisation agent comprises between 20% w/w and 60% w/w of a primary or secondary alcohol, between 40% w/w and 80% w/w of a dialkyl carbonate, between 0.1 and 10% w/w of hydrogen peroxide, between 0.05% w/w and 5% w/w of a peroxycarbonic acid alkyl ester, between 0.1% w/w and 20% w/w of an aldehyde or ketone, and between 0.01% w/w and 3% w/w of an alcohol derived from the dialkyl carbonate. More preferably, the water-free sterilisation agent comprises between 25% w/w to 50% w/w of a primary or secondary alcohol, between 50% w/w and 70% w/w of a dialkyl carbonate, between 0.3% w/w and 5% w/w of hydrogen peroxide, between 0.1% w/w and 3% w/w of a peroxycarbonic acid alkyl ester, between 0.5% w/w and 10% w/w of an aldehyde or ketone, and between 0.03% w/w and 1% w/w of an alcohol derived from the dialkyl carbonate.

In a preferred embodiment, the peroxycarbonic acid alkyl ester has the following formula: alkyl-O-(C=O)-O-OH wherein the alkyl group is preferably a C1-C10 alkyl group, more preferably, C1-C4 alkyl. The alkyl group can be optionally substituted by one or several -OH groups (This is the case, for example, when the peroxycarbonic acid alkyl ester derived from cyclic carbonates such as ethylene carbonate, propylene carbonate or glycerol carbonate).

In a preferred embodiment, the peroxycarbonic acid alkyl ester is selected from the list comprising: peroxycarbonic acid methyl ester ($CH_3$-O-COO-OH), peroxycarbonic acid ethyl ester ($CH_3$-$CH_2$-O-COO-OH), peroxycarbonic acid 2-propyl ester (($CH_3$)$_2$-CH-O-COO-OH), peroxycarbonic acid 2-hydroxy-1-methyl ethyl ester (($CH_2OH$)($CH_3$)-CH-O-COO-OH) and peroxycarbonic acid 2,3-dihydroxypropil ester ($CH_2OH$-CHOH-$CH_2$-O-COO-OH).

The sterilisation agent composition combines the powerful microbicidal properties of the peroxycarbonic acid alkyl ester / hydrogen peroxide pair with the bacteriostatic properties of the alcohol / dialkyl carbonate pair. The oxidative mechanism of action inactivates efficiently the more resistant forms of pathogenic microorganisms (e.g., spores) in very short periods of time.

The water-free composition is soluble in water, which enables the delivery of the sterilisation agent into water systems for the treatment of common pathogenic microbes found in public pools, irrigation systems, industrial refrigeration circuits, cleaning in place (CIP) pipes, food surfaces and food packaging materials and other objects in general that are used in fields such as food and beverage manufacturing and water treatment.

A **fourth aspect** of the invention relates to a water-free disinfection/sterilisation formulation comprising the water-free disinfection/sterilisation agent defined in the second/third aspect of the invention, respectively, and a liquid carrier fluid, wherein the carrier is a liquid solvent, being said liquid solvent other than water or, alternatively, being water said liquid solvent.

Examples of liquid solvents other than water are organic solvents that preferably include: oxygenated solvents such as, but not limited to, lactic acid, ethyl lactate, 2-ethyhexyl lactate, glycerol carbonate, triacetin, dibasic esters (DBE) that are a mixture of the dimethyl esters of adipic, glutaric, and succinic acids, propylene carbonate, dimethyl carbonate, *N,N*-dimethyl octanamide, *N,N*-dimethyl octanamide, methanol, ethanol, *n*-propanol, *n*-butanol, *n*-pentanol, and *n*-hexanol, and isomers thereof, solketal, ethylene glycol, propylene glycol, butylene glycol, dimethyl carbonate, diethyl carbonate, liquid carbon dioxide, ethylene glycol monopropyl ether, ethylene glycol monobutyl ether, ethylene glycol monohexyl ether, diethylene glycol monopropyl ether, diethylene glycol monobutyl ether, diethylene glycol monohexyl ether, propylene glycol methyl ether, propylene glycol ethyl ether, propylene glycol monopropyl ether, propylene glycol monobutyl ether, propylene glycol *t*-butyl ether, di- or tri-polypropylene glycol methyl or ethyl or propyl or butyl ether, the corresponding acetate and propionate esters of the above mentioned glycols or mixtures thereof; silicon-based solvents such as, but not limited to, methylsiloxanes; hydrocarbon solvents such as, but not limited to, mixtures of aliphatic, open-chain or alicyclic C7 to C12 hydrocarbons (mineral spirits).

More preferably, liquid solvents are selected from the list comprising: ethyl lactate, 2-ethylhexyl lactate, glycerol carbonate, triacetin, dimethyl succinate, diethyl succinate, propylene carbonate, dimethyl carbonate, *N,N*-dimethyl octanamide, *N,N*-dimethyl octanamide, ethanol, *n*-propanol, *n*-hexanol, and isomers thereof, solketal, propylene glycol, dimethyl carbonate, diethyl carbonate, and liquid carbon dioxide, and mixtures thereof.

A water-miscible organic solvent can be selected as a carrier fluid. The key advantages of a formulation comprising the water-free disinfection/sterilisation agent and said water-miscible organic solvent include: i) Improved Solubility: water-miscible organic solvents can dissolve substances that aren't soluble in water. This property makes them excellent carriers for specific disinfecting or sterilizing agents, broadening the range of substances that can be effectively used in these formulations, ii) enhanced penetration: These solvents have a superior ability to penetrate microbial cells compared to water. This characteristic enhances the efficacy of the disinfecting agent, making it more effective in destroying or inhibiting the growth of microorganisms, iii) evaporation rate: many water-miscible organic solvents have a high evaporation rate. This feature is advantageous as it allows the active agent to remain on the surface for the necessary contact time without leaving a residue. It ensures that the disinfecting or sterilizing agent is effective while minimizing mess and cleanup, and iv) compatibility with water: The ability to be easily diluted or cleaned with water is a significant advantage. This compatibility offers flexibility in application and makes these formulations more user-friendly, especially in settings where water is readily available for cleanup or dilution. These formulations can be easily diluted or cleaned with water, providing flexibility in application.In a preferred embodiment, the volume proportion of the water-free disinfection agent in the formulations is between 0.01 % v/v and 70% v/v. More preferably, the volume proportion is between 0.1% v/v and 40% v/v. And the volume proportion of the water-free sterilisation agent in the formulations is between 0.1% v/v and 30% v/v. More preferably, the volume proportion is between 0.5% v/v and 20% v/v.

In a preferred embodiment, the water-free disinfection or sterilisation agent, as defined in the second or third aspect of the invention, or the water-free disinfection or sterilisation formulations, as defined in the fourth aspect of the invention, also comprises an additive selected from: anticorrosive agents, cleaning agents, gelling agents and fragances.

The anti-corrosive agents are preferably selected from different type of chelating agents. These additives agents bind with metal ions which can catalyze the decomposition of hydrogen peroxide. Hydrogen peroxide is relatively stable but can decompose in the presence of light, heat, or certain contaminants. Furthermore, they prevent ions from interfering with disinfection/sterilisation operations, enhancing the effectiveness of final composition. They are preferably selected from: Citric Acid, EDTA (ethylenediaminetetraacetic acid), HEDP (1-hydroxyethylidene-1,1-diphosphonic acid) DTPA (Diethylenetriaminepentaacetic Acid), NTA (Nitrilotriacetic Acid), EGTA (Ethylene Glycol Tetraacetic Acid), HEDTA (Hydroxyethyl Ethylenediaminetriacetic Acid). To enhance its stability, especially in commercial products, preservatives and stabilizers can be added.

The cleaning agents are selected based on the nature of the surfaces being cleaned, and compatibility with the sterilisation process and selected from different type of surfactants anionic, nonionic, cationic, or amphoteric that reduce surface tension, helping to remove organic matter from surfaces while produce the disinfection / esteriliation. These are are preferably selected from: Silicone-based Surfactants such as Silwet™, modified silicone oils such as Dow Corning and Wacker Chemie, cationic surfactants such as Quaternary Ammonium Salts (Quats) like BTC@, Anionic Surfactants: such as alkyl sulfates and sulfonates, amphoteric surfactants such as betaines and aminoxides like Amphitol® and Amphoterge®, Ester-based Surfactants such as lactate esters and citrate esters.

Enzymes cleaning agents, which enhance their ability to break down various types of organic soils such as proteins, fats, and carbohydrates, can be used. The enzymes cleaning agents are selected from proteases, lipases, amilases, cellulases and mannanases or mixtures thereof.

The gelling agents are preferably selected from: fumed silica as a form of silicon dioxide that can gel organic solvents such as Aerosil® and Cab-O-Sil®, organoclays such Bentone® or Cloisite®, natural waxes such as Thixcin® R or Castorwax®. The presence of these additives is used to modify thixotropy and rheology.

The fragrances are preferably selected from: tea tree oil, eucalyptus oil, cinnamon oil, and thyme oil. These fragrances typically obtained from essential oils are known for their antimicrobial properties. These oils not only impart a pleasant aroma but also contribute to reducing bacterial presence, making them suitable for use in products where both fragrance and disinfection are desired.

In a preferred embodiment, the additives (total sum thereof) are present in the water-free disinfection or sterilisation agents or compositions in a concentration between 0.01% w/w and 5% w/w.

The disinfection/sterilisation formulations are prepared by mixing the corresponding disinfection/sterilisation agent with the fluid carrier and the optional additives if present.

The water-free disinfection/sterilisation agent or formulation can be applied to a target treatment area or material. Preferably, the application is carried out by spraying.

In the present invention, the disinfection/sterilisation agent could also be mixed with water to form an aqueous disinfection/sterilisation composition. Then the present invention also relates to an aqueous disinfection/sterilisation composition comprising water-free disinfection or sterilisation agent, as defined in the second or third aspect of the invention, and water, wherein the content of water is less than 90%v/v, more preferably, less than 85% v/v.

Then, the present invention also relates to an aqueous disinfection/sterilisation composition comprising water-free disinfection or sterilisation agent, as defined in the second or third aspect of the invention, water and an additive selected from: anticorrosive agents, cleaning agents, gelling agents and fragances or combinations thereof. The preferred anticorrosive agents, cleaning agents, gelling agents and fragrances are as defined above.

A **fifth aspect** of the invention relates to a water-free disinfection/sterilisation formulation comprising the water-free disinfection/sterilisation agent or formulation defined in the second/third and fourth aspects of the invention, respectively, and a gaseous carrier fluid.

In a preferred embodiment, the gaseous carrier fluid is selected form air, nitrogen, carbon dioxide ($CO_2$), propane, butane, isobutane, dimethyl ether, and 1,1-difluoroethane or combinations thereof.

Formulations of the water-free disinfection/sterilisation agent with gaseous carrier fluids can be prepared in three different ways:

a) Injection to a gas stream. The water-free disinfection/sterilisation agent, or its formulation with liquid carrier fluids, is injected to a stream of a gaseous carrier fluid, preferably air, nitrogen, and carbon dioxide. All the components of the disinfection/sterilization agent evaporate under the stream of gas and the resulting gaseous mixture is homogeneous. The evaporation is facilitated by gas streams with higher temperatures. The ratio between the rate of addition of the disinfection/sterilisation agent and the flow rate of the gas stream will determine the actual concentration of the active species, peroxycarbonic acid alkyl ester and/or hydrogen peroxide in the gas mixture. Lethal concentrations are determined for each application scenario. To set a lethal concentration, the flow ratio is adjusted at the required value. The resulting gaseous formulation of the disinfection/sterilization agent can be used to disinfect or sterilise packaging materials, manufacturing equipment, clean rooms and medical devices.

b) Dissolution in supercritical carbon dioxide. When carbon dioxide in the supercritical state (temperature above 31°C and pressure above 74 bar) is mixed with the water-free disinfection/sterilisation agent in a pressure vessel, it forms a stable mixture that can be used directly as a gas phase disinfection/sterilisation medium.

c) Pressurization with gaseous carrier fluids and aerosol formation. Both the water-free disinfection/sterilisation agent, and its mixtures with liquid carrier fluids, can be mixed with gaseous carrier fluids in pressurized containers. By spraying the mixture through a nozzle, the resulting mist can be applied to disinfect or sterilise a surface or material.

In a preferred embodiment, the temperature of the gaseous formulation after the disinfection/sterilization agent is injected to the stream of gaseous carrier fluid and evaporated, according to method a), is between 30°C and 80°C, and the volumetric ratio between the gaseous carrier fluid and the liquid disinfection/sterilisation agent is between 100 v/v and 6000 v/v.

In a preferred embodiment, the concentration of the disinfection/sterilisation agent in the supercritical carbon dioxide formulation, according to method b), is between 0.5% w/w and 40% w/w. More preferably, the concentration is between 1% w/w and 30% w/w, and the temperature is maintained between 31°C and 80°C, more preferably, between 31°C and 60°C and the pressure is between 74 bar and 150 bar, more preferably, between 80 bar and 120 bar.

In a preferred embodiment, the concentration of the gas carrier in the pressurized composition, according to method c), is between 10% w/w and 90% w/w.

The gaseous carrier fluids, when homogeneously mixed with the components of the disinfection/sterilisation agent, aid in the penetration of active species (hydrogen peroxide and peroxycarbonic acid alkyl esters) inside packages and lumen-containing objects and other items with intricate shapes. This includes medical equipment like endoscopes. Additionally, these active substances have the ability to permeate through the standard materials used in sterilisation packages and wraps, such as medical-grade paper.

The microbial inactivation mechanism of both hydrogen peroxide and the peroxycarbonic acid alkyl ester is oxidative and does not leave low volatility residues or corrosive by-products. The decomposition products are oxygen, water, carbon dioxide and alcohol, being innocuous and volatile. These important features allow for shorter aeration processes to remove the volatile components and avoid the deterioration of metals like brass or copper.

A **last aspect** of the invention relates to the use of the water-free disinfection and sterilisation agents and formulations described above. The disinfection and sterilisation agents and their corresponding fluid formulations can be used in cleaning, sanitation, disinfection and sterilisation processes like the disinfection of rooms in pharmaceutical and healthcare facilities, public water facilities like pools, industrial water disinfection such as refrigeration circuits, the disinfection of foods like fruits and vegetables, food packaging materials, food surfaces, the disinfection of animals and animal farm equipment and facilities, the sterilisation of surfaces in pharmaceutical and healthcare facilities, medical devices, surgical instruments, the cleaning and sterilisation of reprocessed medical items and devices, and the sterilisation of food packaging materials. When medical devices containing lumens undergo sterilisation, the most effective diffusion duration for a specific lumen and subject is determined through comprehensive testing. These tests adhere to the half cycle validation guidelines outlined in ISO 14937 standards. ISO 14937 establishes general requirements for characterizing a sterilising agent and for the development, validation, and routine control of the sterilization process for medical devices.

In a preferred embodiment, the disinfection and sterilisation agents and their corresponding formulations can be used in combination with ultraviolet light to enhance the microbicidal action.

**Definitions:**

The term "primary alcohol" relates to an alcohol having the hydroxyl group attached to a primary carbon atom. It can also be defined as a molecule containing a "-CH$_2$OH" group.

The term "secondary alcohol" relates to an alcohol that has the hydroxyl group connected to a secondary carbon atom. It can also be defined as a molecule that contains a "-CHOH" group.

The term "alkyl" relates in the present invention to a radical formed by an aliphatic, linear or branched hydrocarbon chain, for example, methyl, ethyl, n-propyl, i-propyl, n-butyl, tert-butyl, sec-butyl, n-pentyl, etc. A C1-C10 alkyl is an alkyl having between 1 and 10 carbon atoms. In the present invention, the term "alkyl" include alkyl groups optionally substituted with one or more -OH groups.

The term "alkoxy" relates to an -O-alkyl radical such as, for example, methoxy, ethoxy, or propoxy. A C1-C4 alkoxide relates to an -O-alkyl group where the alkyl group has between 1 and 4 carbon atoms.

The term "alkylene" relates to a divalent radical derived from a branched or linear alkane such as -CH$_2$CH$_2$-, -CH$_2$CH$_2$(CH$_3$)-, -CH$_2$CH$_2$CH$_2$- and -CH$_2$CH$_2$CH$_2$CH$_2$-. A C2-C6 alkylene is an alkylene comprising between 2 and 6 carbon atoms.

The term "disinfection agent" as the agent able to produce at least a 3-log reduction, meaning it reduces the number of live microorganisms by a factor of 1,000. A disinfection agent aim to significantly reduce the number of pathogenic microorganisms, but they may not eliminate all forms of microbial life, particularly resistant spores.

The term "sterilisation agent" is defined as a biocidal solution that provides the desired sterilisation effect, inactivating or destroying completely microorganisms, when delivered directly or in combination with carrier fluids. The sterilisation agent is composed of chemical substances that collectively show the ability to inactivate or destroy microorganisms and, simultaneously, the ability to dissolve in carrier and auxiliary fluids allowing its transport and diffusion through target treatment areas and materials. Sterilisation agent aims for a 6-log or greater reduction, indicating a reduction of the number of live microorganisms by at least a factor of 1,000,000. It is intended to destroy all forms of microbial life, including spores.

The term "carrier fluid" is defined as a liquid or gas that is able to dissolve the disinfecting or the sterilisation agent to form a formulation that exhibit biocidal properties, in particular sterilisation properties.

"Minimum biocidal concentration" relates to the lowest concentration of a biocidal agent that, for a specified contact time, will produce a lethal and irreversible reduction in the viable population of target microorganisms. The effectiveness can be measured by the logarithmic reduction in viable microorganisms after treatment.

The term "sanitation" relates to the physical removal of contaminating debris, dust, or material. It can be defined as the removal of contamination from an article to the extent required for further processing or intended use [ISO/TS 11139]. Sanitisation will reduce the number of microorganisms, as well as dirt, allowing better contact with the surface to be disinfected or sterilised and reducing the risk of dirt adhering to the surface. Removal of dirt will also reduce the risk of inactivation of a chemical disinfectant and the multiplication of microorganisms.

The term "disinfection" relates to the destruction or elimination of microorganisms to a level that is not harmful to health and safe to handle. This process does not necessarily include the destruction of bacterial spores. As used herein, the term "disinfectant" relates to an agent that kills all vegetative cells, including cells of pathogenic microorganisms.

The term "sterilisation" relates to the complete destruction or elimination of microorganisms, including bacterial spores. "Sterile state" means to be free of viable microorganisms. A validated sterilisation process is used to obtain a product free of viable microorganisms.

The term "peroxycarbonic acid alkyl ester" , as used in the present invention, relates to a compound of formula Alkyl-O-(C=O)-O-OH. It is the reaction product between the dialkyl carbonate and the H$_2$O$_2$ that takes place in step b) of the process described in the first aspect of the invention. The term "alkyl" is as defined previously. Preferably the alkyl is a C1-C10 alkyl group, more preferably, C1-C4 alkyl and can be optionally be substituted by one or several -OH groups.

The term "water-free" used in the present invention with respect to an agent or composition means that the content of water in said agent or composition is less than 0.5 % w/w.

Throughout the description and claims the word "comprises" and its variants are not intended to exclude other technical characteristics, additives, components or stages. For those skilled in the art, other objects, advantages, and features of the invention will emerge in part from the description and in part from the practice of the invention. The following examples and figures are provided by way of illustration, and are not intended to be limiting of the present invention.

## BRIEF DESCRIPTION OF THE FIGURES

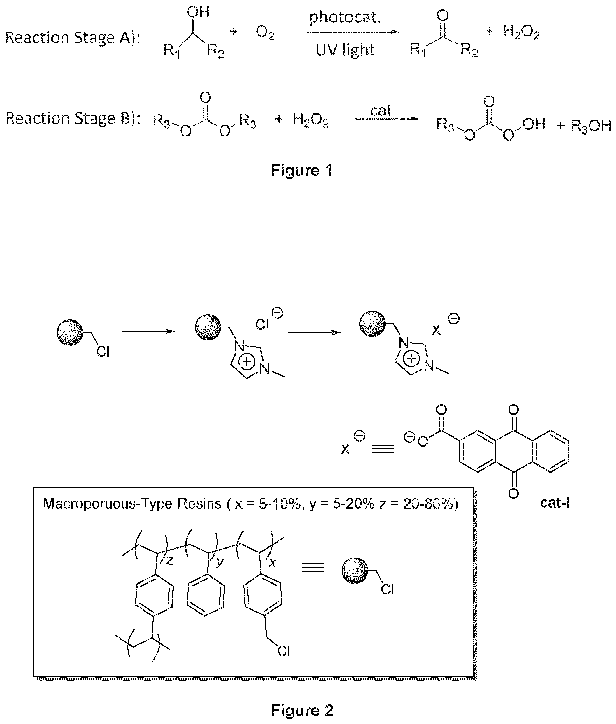

**Figure 1** shows a diagram of the reactions that occur in the photocatalytic reactor (reaction of stage a)) and in the second reactor (reaction of stage b)).

**Figure 2** shows a schematic representation of the synthetic route used to obtain the immobilised Cat-I.

## EXAMPLES

The provided text outlines how the examples in the document demonstrate specific aspects of the invention but are not the only possibilities. They serve as illustrations, and those skilled in the field can apply the core principles of the invention in various ways without straying from its fundamental nature. The text emphasizes that changes and adaptations to the invention's embodiments are possible, and these modifications also fall within the intended scope of the invention, as defined by the claims.

### Example 1: Preparation of a water free sterilisation agent

This example demonstrates the production of a water-free sterilisation agent, which comprises a primary or secondary alcohol, a dialkyl carbonate, hydrogen peroxide, and peroxycarbonic acid methyl ester. The preparation has two variants. The first one involves a two-step catalytic process corresponding to the a) and b) stages described in the first aspect of the invention. The second variant is characterized by a single step that includes the a) and b) stages.

Method:

Analytical procedure: The formation of hydrogen peroxide and peroxycarbonic acid methyl ester is analyzed by the method according to Zhang T. and Huang C.-H., developed for the simultaneous quantification of peracetic acid and hydrogen peroxide in different water matrices using high performance liquid chromatography with ultraviolet light detection (HPLC-UV) (Chemosphere 2020, 257, 127229). In this method, methyl p-tolyl sulfide (MTS) and triphenylphosphine (TPP) are used as indicators for peracetic acid and $H_2O_2$, respectively, by the detection of the oxidation products of sulfoxide MTSO and phosphine oxide TPPO using HPLC-UV-Visible. HPLC method: Column C18 Agilent, wavelength 238 nm, injection volume: 20 μL, eluent: 65% acetonitrile - 35% water, flow rate: 1 mL/min, column temperature: 30°C. Samples containing peroxycarbonic acid methyl ester and $H_2O_2$ were processed as follows: First step: 10 μL of sample were mixed with 490 μL of phosphate buffer 5 mM (pH 6.5), 210 μL of acetonitrile and 140 μL of MTS solution (20 mM in acetonitrile). The solution was stirred for 10 minutes. Second step: the mixed sample was then spiked with 150 μL of TPP solution (20 mM in acetonitrile) and stirred for 30 minutes. The HPLC-UV was used to detect the peaks of MTSO at retention time 3.13 minutes and TPPO at retention time 4.75 minutes simultaneously, and the concentration of each compound was determined by calibration curves.

Two-step procedure for the preparation of the water-free sterilisation agent:

Stage a: 0.102 g of a heterogeneous photocatalyst, designated as Cat I, are suspended in 20 mL of a 50/50 v/v solution of isopropanol / dimethyl carbonate (DMC). Once the suspension is prepared, it is subjected to continuous stirring. The key feature of this method involves the irradiation of the suspension with ultraviolet-visible (UV-Vis) light. This is achieved using two lamps, each emitting light at a wavelength of 365 nm. The irradiation process is maintained for a total duration of 3 hours at ambient room temperature while an air stream is bubbled through the suspension to facilitate the reaction process. After this time the supported photocatalyst is filtered off and the solution analysed by HPLC showing a $[H_2O_2] = 0.243$ M = 8262 ppm.

Stage b: 0.0788 g of Novozym 435 are suspended in 15 mL of the solution obtained in the step 1. The suspension is subjected to continuous stirring at 40 °C for four hours. Alther this time the Novozym 435 was filtered off and the solution analysed by HPLC showing a [peroxycarbonic acid methyl ester] = 0.036M = 3314 ppm; $[H_2O_2] = 0.1850$ M = 6290 ppm.

Single-step procedure for the preparation of the water-free sterilisation agent:

0.1191 g of a heterogeneous photocatalyst, designated as Cat-1, and 0.1047 g of Novozym 435 are suspended in 20 mL of a 50/50 v/v solution of isopropanol / dimethyl carbonate (DMC). Once the suspension is prepared, it is subjected to continuous stirring. The key feature of this method involves the irradiation of the suspension with ultraviolet-visible (UV-Vis) light. This is achieved using two lamps, each emitting light at a wavelength of 365 nm. The irradiation process is maintained for a total duration of 3 hours at ambient room temperature while an air stream is bubbled through the suspension to facilitate the reaction process.

The formation of hydrogen peroxide and peroxycarbonic acid methyl ester analyzed by the HPLC for this example was: [peroxycarbonic acid methyl ester] = 0.0265 M = 2439 ppm; [$H_2O_2$] = 0.1650 M = 5612 ppm.

Preparation of Cat-I. A suspension containing 1 g of Merrifield-type macroporous polymer resin (Merck, CAS 55844-94-5: chloromethylpolystyrene with 5.5% divinylbenzene) with a high chloride loading of 5.5 meq/g in 10 mL methyl imidazole was stirred using orbital shaking at 150 rpm at a temperature of 80°C for 24 hours. After this, the resin was sequentially washed with acetonitrile (three times with 25 mL each), dichloromethane (three times with 25 mL each), and methanol (three times with 25 mL each). The resin was then dried under vacuum at 50°C. This dried resin was then immersed in 20 mL of a 25% ammonia solution and stirred at room temperature for 2 hours. Post this treatment, it was washed with methanol (three times with 25 mL each) and exposed to a solution of N,N-dimethylformamide containing 1.5772 g of anthraquinone-2-carboxylic acid. This mixture was stirred orbitally at room temperature (150 rpm) for 24 hours. The resultant polymeric resin was then filtered and washed with DMF (three times with 25 mL each), acetonitrile (three times with 25 mL each), and methanol (three times with 25 mL each). Finally, the catalyst was dried under vacuum overnight at 50°C, preparing it for subsequent use in hydrogen peroxide photosynthesis.

## Example 2: Bactericidal properties of the disinfection and sterilisation agents

Method: The bactericidal activity of the disinfection and sterilisation agents has been evaluated according to the European Standard UNE EN 13727:2012+A2:2015. This standard corresponds to a quantitative method for the determination of bactericidal activity in the medical area under the conditions in which the active substances or their commercial formulations are used. The conditions may be clean or dirty. It specifies the minimum requirements for bactericidal activity of chemical disinfectant and antiseptic products that form a homogeneous, physically stable preparation when diluted with hard water. It applies to products that are used in the fields of hygienic handrub, hygienic handwash, surgical handrub, surgical handwash, instrument disinfection by immersion, and surface disinfection by wiping, spraying, flooding or other means.

The disinfection agent is introduced into a culture medium hosting an initial microorganism population. Following a specific exposure duration, such as 60 minutes in this instance, surviving microorganisms are counted. Typically, a range of disinfectant solutions is prepared by successive dilutions with water, ensuring each solution is halved with respect to the preceding one. The minimum bactericidal concentration is the concentration at which the microorganism population has diminished by 5 logarithmic units.

This European Standard applies to areas and situations where disinfection or antisepsis is medically indicated. Such indications occur in patient care, for example:

- in hospitals, in community medical facilities and in dental institutions;

- in clinics of schools, of kindergartens and of nursing homes;

and may occur in the workplace and in the home. It may also include services such as laundries and kitchens supplying products directly for the patients.

To consider the product as bactericidal a 5 logarithm reduction in the viable number of bacterial cells must be obtained.

Experimental conditions:

| | |
|---|---|
| Diluent of the disinfection agent during the test | Sterile hard water (hardness less than 375 mg/kg Ca $CO_3$) |
| Product test concentrations | 40%, 20%, 8%, 4%, 2%, 0.8%, 0.4% (v/v) |
| Aspect of product dilutions | Transparent solutions, soluble in sterile hard water |
| Stability of the mixture during the procedure | Stable |
| Interfering substances | Aqueous bovine albumin solution 0.3 g/L |
| Contact times | 60 minutes $\pm$ 10 seconds |
| Temperature of assay | 20°C $\pm$ 1°C |

(continued)

| Temperature of incubation | 37°C ± 1°C |
|---|---|
| Identification of test strains | - *Pseudomonas aeruginosa* CECT 116<br>- *Escherichia coli* K12 CECT 433<br>- *Staphylococcus aureus* CECT 239<br>- *Enterococcus hirae* CECT 4081 |

Results:

| Composition | Test Result |
|---|---|
| Disinfection agent defined in the second aspect of the invention<br>[Isopropyl alcohol] = 39.960% w/w<br>[Dimethyl carbonate] = 57.053% w/w<br>[Hydrogen peroxide] = 1.103% w/w<br>[Acetone] = 1.884% w/w | The tested sample of the disinfection agent, when diluted to 40% in hard water, shows bactericidal activity (5 log reduction), based on UNE EN 13727:2012+A2:2015, under clean conditions (aqueous bovine solution 0.3 g/L) at 20°C, for 60 minutes of contact. |
| Sterilisation agent defined in the third aspect of the invention<br>[Isopropyl alcohol] = 39.537% w/w<br>[Dimethyl carbonate] = 56.424% w/w<br>[Hydrogen peroxide] = 1.101% w/w<br>[Peroxycarbonic acid methyl ester] = 0.534% w/w<br>[Acetone] = 2.381% w/w<br>[Methanol] = 0.186% w/w | The tested sample of the disinfection agent, when diluted to 0.8% in hard water, shows bactericidal activity (5 log reduction), based on UNE EN 13727:2012+A2:2015, under clean conditions (aqueous bovine solution 0.3 g/L) at 20°C, for 60 minutes of contact. |

## Example 3: Miscibility of liquid carriers with water-free disinfection/sterilisation agents and miscibility of the resulting blend with water.

A sterilisation agent comprising 40,879% w/w of isopropanol, 57,011% w/w dimethyl carbonate, 0.197% w/w peroxycarbonic acid methyl ester, and 0.753% w/w hydrogen peroxide, obtained according to the first aspect of the invention is blended with various organic liquids (enumerated in Table 1) at a 50/50 v/v ratio at room temperature, resulting in a homogeneous solution in all cases. Subsequently, the resultant solution is diluted with water at a 50:50 v/v ratio. Table 1 provides information about which aqueous mixtures yield homogeneous solutions.

| Liquid Carrier | Liquid Carrier / Disinfectant Blend 50/50 (v/v) | (Liquid Carrier + Disinfectant) / Water Mixture 50/50 (v/v) |
|---|---|---|
| Diethyl carbonate | Homogeneous | Immiscible |
| Dimethyl carbonate | Homogeneous | Miscible |
| Dimethyl glutarate | Homogeneous | Immiscible |
| Ethanol | Homogeneous | Miscible |
| Ethyl lactate | Homogeneous | Miscible |
| Glycerol carbonate | Homogeneous | Miscible |
| Isopropanol | Homogeneous | Miscible |
| Lactic acid | Homogeneous | Miscible |
| Propylene carbonate | Homogeneous | Immiscible |
| Propylene glycol | Homogeneous | Miscible |
| Solketal | Homogeneous | Miscible |

(continued)

| Liquid Carrier | Liquid Carrier / Disinfectant Blend 50/50 (v/v) | (Liquid Carrier + Disinfectant) / Water Mixture 50/50 (v/v) |
|---|---|---|
| Triacetin | Homogeneous | Immiscible |

**Example 4: Miscibility of gas carriers with water-free disinfection/sterilisation agents**

The miscibility of the water-free disinfection/sterilisation agent with a dense phase of carbon dioxide ($CO_2$) was evaluated. A vial containing a known volume of the water-free disinfection/sterilisation agent was placed into a high-pressure, temperature-controlled stainless-steel chamber with a capacity of 190 mL. Subsequently, $CO_2$ was introduced into the sealed container under isothermal conditions (50°C) until a specified pressure was achieved, and the system was allowed to reach equilibrium for 60 minutes. The percentage of the disinfection/sterilisation agent dissolved in the dense $CO_2$ phase was calculated by measuring the remaining volume of the liquid disinfection/sterilisation agent after removing the gas phase.

Composition of the water-free disinfection agent:

| Component | Concentration (% w/w) |
|---|---|
| Isopropyl alcohol | 39.915 |
| Dimethyl carbonate | 57.041 |
| Hydrogen peroxide | 1.124 |
| Acetone | 1.920 |

Composition of the water-free sterilisation agent:

| Component | Concentration (% w/w) |
|---|---|
| Isopropyl alcohol | 40.281 |
| Dimethyl carbonate | 56.892 |
| Hydrogen peroxide | 0.865 |
| Peroxycarbonic acid methyl ester | 0.246 |
| Acetone | 1.631 |
| Methanol | 0.086 |

The following table summarizes the results obtained for the different examples:

| Composition | $CO_2$ Pressure (bar) | Temperature (Celsius) | Initial volume of disinfection/sterilisation agent (mL) | % v/v Solubilized in $CO_2$ |
|---|---|---|---|---|
| Disinfection agent | 60 | 50 | 2 | 30 |
| Disinfection agent | 100 | 50 | 2 | 100 |
| Sterilisation agent | 100 | 50 | 4 | 100 |

The experimental evidence exemplified that the disinfection /sterilisation agent can be solubilised in carbon dioxide under controlled pressures and temperatures.

## Example 5: Penetration properties of disinfection/sterilisation agents in a $CO_2$ formulation

The capacity of $CO_2$ as a carrier gas to transport the disinfection/sterilisation agent to the subject placed inside sterilisation pouches is assessed. To evaluate the penetration effectiveness of the disinfection/sterilisation agent, a chemical indicator for peracids is placed inside sterilisation pouches. The indicator undergoes a colour change when subjected to the specified sterilisation conditions, offering a visual verification of the permeation of the chemical active component responsible for sterilisation through the pouches. The confirmation is made through a visual comparison of the test strip's reaction zone with the colour scale fields.

Method: Two test strips of the chemical indicator MQuant® Peracetic acid are placed inside the sterilisation pouch ensuring that the indicators are positioned in a location that represents the most challenging conditions for sterilisation within the pouch. The pouch is sealed following the manufacturer's instructions (Sanisus Medical https://sanisusmedical. com/producto/bolsas-para-esterilizar-autosellantes-9x26cm/) verifying its integrity. In a typical cycle the pouch is placed into a high-pressure and thermostated stainless-steel 190 mL capacity chamber together with a vial containing 5 mL of sample. $CO_2$ is introduced isothermally (50°C) into the mixing chamber until the pressure reaches the specified value. The exposure time is 60 minutes. After the sterilisation cycle is complete, the pouch is removed and allowed it to cool to room temperature. The chemical indicators are observed for any colour change following the indications specified by the manufacturer. In this case, yellow means negative result (absence of peroxy species inside the pouch) and brown-orange means positive results (presence of peroxy species inside the pouch).

Results:

| Sample | Composition, w/w | | Colour | Test |
|---|---|---|---|---|
| Control | Negative control of the commercial chemical indicator. | | Yellow | Negative |
| Control | [CO₂] = | 100000% | Yellow | Negative |
| Control | [CO₂] = | 94.026% | Yellow | Negative |
| | [Isopropyl alcohol] = | 2.530% | | |
| | [Dimethyl carbonate] = | 3.440% | | |
| Disinfection agent | [CO₂] = | 93.966% | Brown-Orange | Positive |
| | [Isopropyl alcohol] = | 2.408% | | |
| | [Dimethyl carbonate] = | 3.442% | | |
| | [Hydrogen peroxide] = | 0.068% | | |
| | [Acetone] = | 0.116% | | |
| Sterilisation agent | [CO₂] = | 93.976% | Brown-Orange | Positive |
| | [Isopropyl alcohol] = | 2.427% | | |
| | [Dimethyl carbonate] = | 3.427% | | |
| | [Hydrogen peroxide] = | 0.052% | | |
| | [Peroxycarbonic | 0.015% | | |
| | acid methyl ester] = | | | |
| | [Acetone] = | 0.098% | | |
| | [Methanol]= | 0.005% | | |

## Example 6: Sporicidal properties of disinfection/sterilisation agents in a $CO_2$ formulation

To evaluate the sporicidal efficacy of disinfection/sterilisation agents, a biological indicator for monitoring ethylene oxide (EO) and dry heat sterilisation is placed inside sterilisation pouches. The biological indicator contains a population of 3.0 x 10[6] bacterial spores of *Bacillus atrophaeus* 9372 on a filter paper carrier sealed within a convenient, peel-open envelope. After the sterilisation cycle, the paper strips are placed into a culture medium where any surviving spore growths. The measurement of turbidity is a result, indicating a non-sterile condition. The absence of turbidity is a result, indicating a sterile condition.

Method: Two test strips of the biological indicator MesaStrip for Ethylene Oxide and Dry Heat Sterilisation (SGMG/6) are placed inside the sterilisation pouch ensuring that the indicators are positioned in a location that represents the most challenging conditions for sterilisation within the pouch. Following recommendations of the manufacturer, the glassine envelope of one of the strips is removed. This is done to evaluate the extra resistance to permeation of the glassine envelope. The pouch is sealed following the manufacturer's instructions (Sanisus Medical https://sanisusmedical.com/producto/bolsas-para-esterilizar-autosellantes-9x26cm/) verifying its integrity. In a typical cycle the pouch is placed into a stainless-steel sterilisation chamber of 190 mL capacity together with a vial containing 5 mL of sample. $CO_2$ is introduced isothermally (50°C) into the chamber until the pressure reaches the specified value (100 bar). The exposure time is 60 minutes. The experiment is repeated for the sterilisation agent now placing the biological indicator in the sterilisation chamber without pouch. After the sterilisation cycle is complete, the pouch is removed and allowed it to cool to room temperature. Finally, the paper strips are aseptically placed in a culture medium (soybean casein digest broth) and turbidity is evaluated during seven days.

Results:

| Sample | Composition | | Pouch | Paper Strip Envelope | Test |
|---|---|---|---|---|---|
| Control | Positive control of commercial biological indicator | | - | - | Non sterile |
| Control | [CO₂] = | 100000% | Yes | Removed | Non sterile |
| | | | Yes | Not Removed | Non sterile |
| Control | [CO₂] = | 94.026% | Yes | Removed | Non sterile |
| | [Isopropyl alcohol] = | 2.530% | | | |
| | [Dimethyl carbonate] = | 3.440% | Yes | Not Removed | Non sterile |
| Disinfection agent | [CO₂] = | 93.966% | Yes | Removed | Sterile |
| | [Isopropyl alcohol] = | 2.408% | | | |
| | [Dimethyl carbonate] = | 3.442% | | | |
| | [Hydrogen peroxide] = | 0.068% | | | |
| | [Acetone] = | 0.116% | Yes | Not Removed | Non Sterile |
| Sterilisation agent | [CO₂] = | 93.976% | No | Removed | Sterile |
| | [Isopropyl alcohol] = | 2.427% | | | |
| | [Dimethyl carbonate] = | 3.427% | No | Not Removed | Sterile |
| | [Hydrogen peroxide] = | 0.052% | | | |
| | [Peroxycarbonic acid methyl ester] = | 0.015% | Yes | Removed | Sterile |
| | [Acetone] = | 0.098% | Yes | Not Removed | Non Sterile |
| | [Methanol]= | 0.005% | | | |

**Claims**

1. Method for the preparation of a water-free disinfection agent and/or a sterilisation agent comprising the following stages:

   a) a liquid mixture of a primary or secondary alcohol and a dialkyl carbonate is contacted with oxygen in the presence of a photocatalyst and UV light to obtain hydrogen peroxide ($H_2O_2$) by reaction of oxygen with the alcohol present in the mixture through a photocatalytic reaction,
   b) the solution obtained in stage a) is placed in contact with a catalyst of the perhydrolysis reaction of the dialkyl carbonate at a temperature between 25°C and 80°C, to form a peroxycarbonic acid alkyl ester by reaction of the hydrogen peroxide formed in the previous stage a) and the dialkyl carbonate in the original mixture.

2. The method, according to claim 1, wherein the liquid mixture of step a) comprises between 20-80% w/w of primary or secondary alcohol and the rest of dialkyl carbonate.

3. The method, according to any of previous claims, wherein the primary or secondary alcohol is selected from: isopropanol, ethanol, methanol and butanol and/or the dialkyl carbonate is selected from: dimethyl carbonate, diethyl carbonate, propylene carbonate, ethylene carbonate, and glycerol carbonate.

4. The method, according to claims 1 to 3, wherein steps a) and b) are carried out simultaneously in the same reactor containing the photocatalyst and the catalyst of the perhydrolysis reaction, at a temperature between 25°C and 80°C, in the presence of oxygen and UV light, wherein the liquid mixture of primary or secondary alcohol and a dialkyl carbonate is placed in contact with the two catalysts.

5. A water-free disinfection agent, obtainable in stage a) of the process described in any of claims 1 to 3, that comprises a primary or secondary alcohol, a dialkyl carbonate, hydrogen peroxide and an aldehyde or ketone, which is the oxidation product of said primary or secondary alcohol.

6. A water-free sterilisation agent, obtainable in stage b) of the process described in any of claims 1 to 4, that comprises a primary or secondary alcohol, a dialkyl carbonate, hydrogen peroxide, an aldehyde or ketone, which is the oxidation product of said primary or secondary alcohol, a peroxycarbonic acid alkyl ester and an alcohol, both derived from the perhydrolysis reaction between said dialkyl carbonate and hydrogen peroxide.

7. A water-free disinfection formulation or water-free sterilisation formulation comprising the water-free disinfection agent defined in claim 5 or the water-free sterilisation agent defined in claim 6, respectively, and a carrier fluid, wherein the fluid is selected from a gaseous fluid carrier and a liquid solvent, being the liquid solvent different from water.

8. A water-free disinfection or sterilisation formulation, according to claim 7, also comprising an additive selected from: anticorrosive agents, cleaning agents, gelling agents or combinations thereof.

9. A water-free disinfection or sterilisation formulation, according to claim 7 or 8, wherein the volume proportion of the water-free disinfection agent in the formulations comprising the liquid solvent is between 0.01% v/v and 70% v/v and the volume proportion of the water-free sterilisation agent in the formulations comprising the liquid solvent is between 0.1% v/v and 30% v/v.

10. A water-free disinfection or sterilisation formulation, according to claim 7 or 8, wherein the gaseous carrier fluid is selected from the list comprising: carbon dioxide, air, nitrogen, propane, butane, isobutane, dimethyl ether, and 1,1-difluoroethane or combinations thereof.

11. A water-free disinfection or sterilisation formulation, according to claim 10, wherein the disinfection or sterilisation agent in the formulation is mixed or dissolved in pressurised carbon dioxide.

12. A water-free disinfection or sterilisation formulation, according to claim 10, wherein the disinfection or sterilisation agent in the formulation is dissolved in supercritical carbon dioxide and wherein the content of said agent in the formulation is between 0.5% w/w and 40% w/w.

13. An aqueous disinfection or sterilisation formulation comprising the water-free disinfection agent as defined in claim 5 or water-free sterilisation agent, as defined in claim 6 and water, wherein the content of water is less than 90%v/v.

14. An aqueous disinfection or sterilisation formulation comprising the water-free disinfection agent as defined in claim 5 or water-free sterilisation agent, as defined in as defined in claim 6, water and an additive selected from: anticorrosive agents, cleaning agents, gelling agents or combinations thereof.

15. Use of the water-free disinfection agent defined in claim 5, the water-free sterilisation agent defined in claim 6, or the formulations defined in claim 7 to 14 in cleaning, sanitation, disinfection and sterilisation processes.

Reaction Stage A):

Reaction Stage B):

Figure 1

Macroporuous-Type Resins ( x = 5-10%, y = 5-20% z = 20-80%)

Figure 2

Europäisches
Patentamt

European
Patent Office

Office européen
des brevets

# EUROPEAN SEARCH REPORT

**Application Number**

EP 23 38 3392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2024/003436 A1 (UNIV JAUME I [ES]; ESTEVE COMPANY CARLOS [ES]) 4 January 2024 (2024-01-04) * the claims and the examples * | 1-15 | INV. A01N25/02 A01N47/06 C01B15/026 C07C407/00 A01P1/00 |
| Y | US 7 351 684 B2 (SOLUTIONS BIOMED LLC [US]) 1 April 2008 (2008-04-01) * claim 1; examples 1-6 * | 1-15 | |
| Y | US 2018/289004 A1 (DENZIN SILKE [DE] ET AL) 11 October 2018 (2018-10-11) * claim 1 * | 1-15 | |
| Y | GB 1 237 885 A (PETROCARBON DEV LTD [GB]) 30 June 1971 (1971-06-30) * claim 1; example 1 * | 1-15 | |
| Y | KRAÏEM JAMIL ET AL: "Hydrogen peroxide/dimethyl carbonate: a green system for epoxidation of N-alkylimines and N-sulfonylimines. One-pot synthesis of N-alkyloxaziridines from N-alkylamines and (hetero)aromatic aldehydes", GREEN CHEMISTRY, vol. 18, no. 18, 25 June 2016 (2016-06-25) , pages 4859-4864, XP093076801, GB ISSN: 1463-9262, DOI: 10.1039/C6GC01394E * the whole document * | 1-15 | TECHNICAL FIELDS SEARCHED (IPC) A01N C01C C07C C01B |

-/--

The present search report has been drawn up for all claims

| Place of search | Date of completion of the search | Examiner |
|---|---|---|
| Munich | 31 July 2024 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 38 3392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HUILIN HOU ET AL: "Production of Hydrogen Peroxide by Photocatalytic Processes", ANGEWANDTE CHEMIE INTERNATIONAL EDITION, VERLAG CHEMIE, HOBOKEN, USA, vol. 59, no. 40, 18 May 2020 (2020-05-18), pages 17356-17376, XP072096158, ISSN: 1433-7851, DOI: 10.1002/ANIE.201911609 * the whole document * | 1-15 | |
| Y | US 2021/009515 A1 (COLEMAN TODD [US] ET AL) 14 January 2021 (2021-01-14) * claims 1, 2, 6 and 10; example 1 * | 1-15 | |
| Y | US 4 751 015 A (HUMPHREYS ROBERT W [US] ET AL) 14 June 1988 (1988-06-14) * the claims; the examples; columns 4-10 * | 1-15 | |

**TECHNICAL FIELDS SEARCHED (IPC)**

The present search report has been drawn up for all claims

| Place of search | Date of completion of the search | Examiner |
|---|---|---|
| Munich | 31 July 2024 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 38 3392

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2024

| Patent document cited in search report | | Publication date | Patent family member(s) | | Publication date |
|---|---|---|---|---|---|
| WO 2024003436 | A1 | 04-01-2024 | ES | 2958040 A1 | 31-01-2024 |
|  |  |  | WO | 2024003436 A1 | 04-01-2024 |
| US 7351684 | B2 | 01-04-2008 | AU | 2006218874 A1 | 08-09-2006 |
|  |  |  | BR | PI0608399 A2 | 29-12-2009 |
|  |  |  | CA | 2599010 A1 | 08-09-2006 |
|  |  |  | CN | 101163784 A | 16-04-2008 |
|  |  |  | DK | 1856236 T3 | 04-12-2017 |
|  |  |  | EP | 1856236 A1 | 21-11-2007 |
|  |  |  | IL | 185506 A | 31-10-2012 |
|  |  |  | JP | 4971198 B2 | 11-07-2012 |
|  |  |  | JP | 2008531583 A | 14-08-2008 |
|  |  |  | KR | 20070110394 A | 16-11-2007 |
|  |  |  | US | 2006198798 A1 | 07-09-2006 |
|  |  |  | US | 2006263239 A1 | 23-11-2006 |
|  |  |  | US | 2008233005 A1 | 25-09-2008 |
|  |  |  | WO | 2006093792 A1 | 08-09-2006 |
|  |  |  | ZA | 200707893 B | 31-12-2008 |
| US 2018289004 | A1 | 11-10-2018 | CN | 108135165 A | 08-06-2018 |
|  |  |  | EP | 3355697 A1 | 08-08-2018 |
|  |  |  | US | 2018289004 A1 | 11-10-2018 |
|  |  |  | WO | 2017054850 A1 | 06-04-2017 |
| GB 1237885 | A | 30-06-1971 | BE | 733300 A | 20-11-1969 |
|  |  |  | DE | 1925379 A1 | 27-11-1969 |
|  |  |  | ES | 367433 A1 | 01-04-1971 |
|  |  |  | FR | 2008896 A1 | 30-01-1970 |
|  |  |  | GB | 1237885 A | 30-06-1971 |
|  |  |  | NL | 6907639 A | 24-11-1969 |
|  |  |  | SE | 368194 B | 24-06-1974 |
| US 2021009515 | A1 | 14-01-2021 | AU | 2019242872 A1 | 15-10-2020 |
|  |  |  | AU | 2024202596 A1 | 09-05-2024 |
|  |  |  | BR | 112020019967 A2 | 05-01-2021 |
|  |  |  | CA | 3094471 A1 | 03-10-2019 |
|  |  |  | RU | 2769556 C1 | 04-04-2022 |
|  |  |  | US | 2021009515 A1 | 14-01-2021 |
|  |  |  | US | 2024101511 A1 | 28-03-2024 |
|  |  |  | WO | 2019191387 A1 | 03-10-2019 |
| US 4751015 | A | 14-06-1988 | AU | 613900 B2 | 15-08-1991 |
|  |  |  | BR | 8801185 A | 25-10-1988 |
|  |  |  | CA | 1324379 C | 16-11-1993 |
|  |  |  | DE | 3886969 T2 | 28-04-1994 |
|  |  |  | EP | 0284132 A2 | 28-09-1988 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 38 3392

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2024

| Patent document cited in search report | Publication date | Patent family member(s) | | Publication date |
|---|---|---|---|---|
| | | ES | 2061625 T3 | 16-12-1994 |
| | | JP | H07103075 B2 | 08-11-1995 |
| | | JP | S63258447 A | 25-10-1988 |
| | | KR | 880011091 A | 26-10-1988 |
| | | MY | 104103 A | 31-12-1993 |
| | | PH | 24209 A | 10-04-1990 |
| | | TR | 26863 A | 19-08-1994 |
| | | US | 4751015 A | 14-06-1988 |
| | | ZA | 881870 B | 29-11-1989 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3383163 A
- US 4756882 A
- US 10293068 B2
- WO 2008134290 A1
- US 20110274583 A1
- US 20180021466 A1
- WO 2008046214 A1
- WO 2008052332 A1
- US 7108832 B2
- US 8388944 B2
- US 2021238135 A1
- WO 9828267 A1
- WO 9534537 A1
- US 8546449 B
- WO 2019191387 A1
- WO 2008047263 A2
- WO 0110215 A1

**Non-patent literature cited in the description**

- **JOSE M. CAMPOS-MARTIN et al.** *Angew. Chem. Int. Ed*, 2006, vol. 45, 6962-6984
- **SPEELMAN et al.** *Energy Environ. Sci.*, 2022, vol. 15, 4015-4024
- *CHEMICAL ABSTRACTS*, 55844-94-5